(19) Europäisches Patentamt
European Patent Office
Office européen des brevets

(11) **EP 3 711 929 A1**

(12) **EUROPEAN PATENT APPLICATION**
published in accordance with Art. 153(4) EPC

(43) Date of publication:
**23.09.2020 Bulletin 2020/39**

(51) Int Cl.:
**B29C 64/393** *(2017.01)*      **B29C 64/124** *(2017.01)*
**B33Y 10/00** *(2015.01)*       **B33Y 40/00** *(2020.01)*
**B33Y 50/02** *(2015.01)*

(21) Application number: **18890971.7**

(22) Date of filing: **20.12.2018**

(86) International application number:
**PCT/JP2018/047115**

(87) International publication number:
**WO 2019/124526 (27.06.2019 Gazette 2019/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.12.2017 JP 2017243513**

(71) Applicant: **Mitsui Chemicals, Inc.**
**Minato-ku**
**Tokyo 105-7122 (JP)**

(72) Inventors:
• **SAKAMAKI, Toshikazu**
  **Sodegaura-shi, Chiba 299-0265 (JP)**
• **SHIODE, Hirohisa**
  **Sodegaura-shi, Chiba 299-0265 (JP)**
• **HAYASHI, Takaaki**
  **Sodegaura-shi, Chiba 299-0265 (JP)**

(74) Representative: **Hoffmann Eitle**
**Patent- und Rechtsanwälte PartmbB**
**Arabellastraße 30**
**81925 München (DE)**

(54) **STEREOLITHOGRAPHY APPARATUS, STEREOLITHOGRAPHY PROGRAM, AND STEREOLITHOGRAPHY METHOD**

(57) A measuring section of a stereolithography device measures a temperature of a photocurable resin liquid by a temperature sensor. A setting section sets an integrated light amount on the basis of temperature information obtained from a measured temperature and curing information stored in a storage section. An illuminating section controls a projector such that light, by which the set integrated light amount is obtained, is illuminated onto the photocurable resin liquid. Due thereto, light, which is such that there becomes an integrated light amount corresponding to the temperature of the photocurable resin liquid, is illuminated onto the photocurable resin liquid, and therefore, a molded object can be molded with high accuracy.

FIG.2

**Description**

Technical Field

The present invention relates to a stereolithography device, a stereolithography program and a stereolithography method.

Background Art

Highly-accurate molds are needed in the production of prototypes (trial production) and in product production, and the rapid plot typing technique is often used in trial manufacturing film type production and product production. Rapid plot typing techniques include a stereolithography method (light molding method), a powder crystal method (powder bed fusion molding method), an inkjet method (material jetting method), a sheet layering method, an extrusion method (material extrusion method, melt extrusion method), and the like. In the stereolithography method, a solid, which is a prototype or a product or the like and in which cured layers are layered, is molded by repeating the selective illumination of light onto a photocurable composition that is in liquid form, and the formation of one cured layer of the molded object.

Japanese Patent Application Laid-Open (JP-A) No. 2005-131938 proposes, as a stereolithography method that can carry out high-speed molding of high accuracy and little warping and deformation, a stereolithography method in which the surface temperature of a cured resin layer of a photocurable resin liquid, which is cured by light being illuminated thereon, is measured, and, by blowing air out in accordance with the measured surface temperature, a rise in temperature that accompanies the heat generated by curing is suppressed.

SUMMARY OF INVENTION

Technical Problem

By the way, in field of production of dental prostheses and the like, highly-accurate molds of dental prostheses and the like are required. To address this, the photoreaction speed in the photocuring of a photocurable composition is affected by the illuminance of the light, and is affected by the temperature of the photocurable composition. The degree of photocuring of a photocurable composition varies in accordance with the integrated light amount and the temperature. Therefore, it is thought that, in a stereolithography method, the temperature of the photocurable composition affects the accuracy of production of the molded obj ect.

The present invention was made in view of the above-described circumstances, and an object thereof is to provide a stereolithography device, a stereolithography program and a stereolithography method that enable highly-accurate stereolithography using a photocurable composition.

Solution to Problem

A stereolithography device of an aspect of the present invention for achieving the above-described object is a stereolithography device that forms a cured layer by illuminating light onto a photocurable composition that is in a liquid form and photocuring the photocurable composition, and that layers the cured layers and molds a three-dimensional molded object, the device comprising: a measuring section that measures a temperature of the photocurable composition; and an illuminating section that, at a time of forming the cured layer, illuminates, onto the photocurable composition, light that is such that there becomes an integrated light amount that corresponds to a measurement temperature of the measuring section.

From illuminance (mW/cm$^2$) and illumination time period (sec), the integrated light amount (mJ/cm$^2$) in the present aspect is obtained as:

$$\text{integrated light amount (mJ/cm}^2) = \text{illuminance (mW/cm}^2) \times \text{illumination time period (sec)}.$$

A stereolithography program of an aspect of the present invention causes a computer, which is provided at a stereolithography device that forms a cured layer by illuminating light onto a photocurable composition that is in a liquid form and photocuring the photocurable composition, and that layers the cured layers and molds a three-dimensional molded object, to function as: a measuring section that measures a temperature of the photocurable composition; and an illuminating section that, at a time of forming the cured layer, illuminates, onto the photocurable composition, light that is such that there becomes an integrated light amount that corresponds to a measurement temperature of the measuring section.

A stereolithography method of an aspect of the present invention is a stereolithography method that forms a cured layer by illuminating light onto a photocurable composition that is in a liquid form and photocuring the photocurable composition, and that layers the cured layers and molds a three-dimensional molded object, the method comprising: a measuring step of measuring a temperature of the photocurable composition; and an illuminating step of, at a time of forming the cured layer, illuminating, onto the photocurable composition, light by which there is obtained an integrated light amount that corresponds to the temperature that has been measured.

Advantageous Effects of Invention

In accordance with the aspects of the invention, there is the effect that highly-accurate stereolithography is possible because light of an integrated light amount, which corresponds to a temperature of a photocurable composition that is in liquid form, can be illuminated onto the photocurable composition.

BRIEF DESCRIPTION OF DRAWINGS

Fig. 1 is a schematic structural drawing of a stereolithography device relating to a present embodiment.
Fig. 2 is a functional block drawing of a control device.
Fig. 3A is a flowchart showing an overview of processing of the stereolithography device.
Fig. 3B is a flowchart showing an overview of molding processing.
Fig. 3C is a flowchart showing an overview of molding processing that is an example of setting an integrated light amount.
Fig. 3D is a flowchart showing an overview of molding processing that is another example of setting an integrated light amount.
Fig. 4 is a graph showing photocured layer film thickness with respect to integrated light amount, at each of plural temperatures.
Fig. 5A is a schematic drawing showing an overview of divisional regions.
Fig. 5B is a plan view that is seen from below and shows an overview of the divisional regions of Fig. 5A.
Fig. 5C is a cross-sectional view that is seen from a side and shows an overview of the divisional regions of Fig. 5A.
Fig. 6 is a graph showing results of measurement of film thickness of a cured layer with respect to integrated light amount, of a photocurable resin liquid relating to Examples.
Fig. 7 is a perspective view showing a molded object relating to the Examples.
Fig. 8A is a graph showing film thickness of a cured layer with respect to integrated light amount, per temperature and relating to Example 1.
Fig. 8B is a graph showing the slope and the intercept of the change in film thickness of a cured layer with respect to integrated light amount, in accordance with temperature.
Fig. 9A is a graph showing logarithmic values of film thickness of a cured layer with respect to logarithmic values of the integrated light amount, per temperature and relating to Example 2.
Fig. 9B is a graph showing the slope and the intercept of the change in film thickness logarithmic values of a cured layer with respect to logarithmic values of integrated light amount, in accordance with temperature.

DESCRIPTION OF EMBODIMENTS

Examples of embodiments of the present invention are described in detail hereinafter with reference to the drawings.
The present embodiment includes the following aspects.

<1> A stereolithography device that forms a cured layer by illuminating light onto a photocurable composition that is in a liquid form and photocuring the photocurable composition, and that layers the cured layers and molds a three-dimensional molded object, the device comprising: a measuring section that measures a temperature of the photocurable composition; and an illuminating section that, at a time of forming the cured layer, illuminates, onto the photocurable composition, light that is such that there becomes an integrated light amount that corresponds to a measurement temperature of the measuring section.
<2> The stereolithography device of <1>, wherein the measuring section measures the temperature of the photocurable composition within a predetermined region, and the illuminating section illuminates light onto the photocurable composition on the basis of temperature information obtained from a measurement temperature that is set in accordance with predetermined standards to be used in control of the integrated light amount, from among the measurement temperatures.

<3> The stereolithography device of <2>, further comprising a measurement temperature processing section that, in parallel with formation of the cured layer, can set, in accordance with predetermined standards and from among the measurement temperatures, a measurement temperature that is to be used in control of the integrated light amount.

<4> The stereolithography device of <2>, wherein the illuminating section carries out control of the integrated light amount of the basis of the temperature information that is obtained from a measurement temperature, of any region or time period and whose use in control of the integrated light amount is set in advance, among the measurement temperatures.

<5> The stereolithography device of any one of <2> through <4>, comprising: an acquiring section that acquires, from a temperature measured by the measuring section, the temperature information of the photocurable composition within a region facing a molding surface at which the cured layer is to be formed, wherein the illuminating section illuminates light, which is such that there becomes the integrated light amount that is set from the temperature information, onto the photocurable composition within the region that faces the molding surface.

<6> The stereolithography device of <5>, wherein the acquiring section sets the temperature information for each of a plurality of divisional regions that are obtained by dividing a region, at which one of the cured layers is to be formed, longitudinally and laterally along the molding surface, and the illuminating section illuminates, onto the respective divisional regions, light that is such that there becomes the integrated light amount that is set from the temperature information of that divisional region.

<7> The stereolithography device of any one of <2> through <6>, wherein temperature information in a film thickness direction of the cured layer is included in the temperature information.

<8> The stereolithography device of any one of <2> through <7>, wherein the measuring section measures changes in temperature of the photocurable composition in a predetermined time period, and the illuminating section carries out control of the integrated light amount on the basis of temperature information that includes measured temperature changes.

<9> The stereolithography device of any one of <2> through <8>, wherein the illuminating section carries out control of the integrated light amount on the basis of temperature information that is weighted in accordance with a cured layer that is layered or a measurement temperature.

The stereolithography device of any one of <2> through <9>, further comprising: a storage section in which is stored curing information expressing, for the photocurable composition, a relationship between temperature of the photocurable composition, an integrated light amount, and film thickness of the cured layer that corresponds to the integrated light amount; and a setting section that, on the basis of the temperature information and the curing information, sets the integrated light amount of light that is to be illuminated onto the photocurable composition from the illuminating section.

<11> The stereolithography device of any one of <2> through <10>, further comprising: a storage section in which is stored curing information expressing, for the photocurable composition, a relationship between temperature of the photocurable composition, an integrated light amount, and film thickness of the cured layer that corresponds to the integrated light amount; and a correcting section that, in accordance with the temperature information, corrects the integrated light amount that is set in advance so as to be illuminated onto the photocurable composition at the illuminating section.

<12> The stereolithography device of any one of <2> through <11>, wherein, the higher the temperature of the photocurable composition obtained from the temperature information, the smaller the integrated light amount of light illuminated from the illuminating section, as compared with a case in which the temperature is low.

<13> The stereolithography device of any one of <1> through <12>, wherein the illuminating section illuminates, onto the photocurable composition, light by which an illuminance corresponding to the integrated light amount is obtained in an illumination time period that is set in advance.

<14> The stereolithography device of any one of <1> through <13>, wherein the illuminating section illuminates light, by which an illuminance that is set in advance is obtained, onto the photocurable composition for an illumination time period that corresponds to the integrated light amount.

<15> The stereolithography device of any one of <1> through <14>, wherein the molded object that is three-dimensional is molded such that an average film thickness of each of the cured layers is greater than or equal to 20 $\mu$m and less than or equal to 150 $\mu$m.

<16> The stereolithography device of any one of <1> through <15>, wherein, at a time of forming the cured layer, light is illuminated such that a region of the photocurable composition, which region is, in a film thickness direction, a width of greater than or equal to 5% and less than or equal to 30% of a film thickness of the photocured layer, is cured.

A stereolithography program causing a computer, which is provided at a stereolithography device that forms a cured layer by illuminating light onto a photocurable composition that is in a liquid form and photocuring the photocurable composition, and that layers the cured layers and molds a three-dimensional molded object, to function as: a measuring section that measures a temperature of the photocurable composition; and an illuminating section that, at a time of forming the cured layer, illuminates, onto the photocurable composition, light that is such that there becomes an integrated light amount that corresponds to a measurement temperature of the measuring section.

A stereolithography method that forms a cured layer by illuminating light onto a photocurable composition that is in a liquid form and photocuring the photocurable composition, and that layers the cured layers and molds a three-dimensional molded object, the method comprising: a measuring step of measuring a temperature of the photocurable composition; and an illuminating step of, at a time of forming the cured layer, illuminating, onto the photocurable composition, light by which there is obtained an integrated light amount that corresponds to the temperature that has been measured.

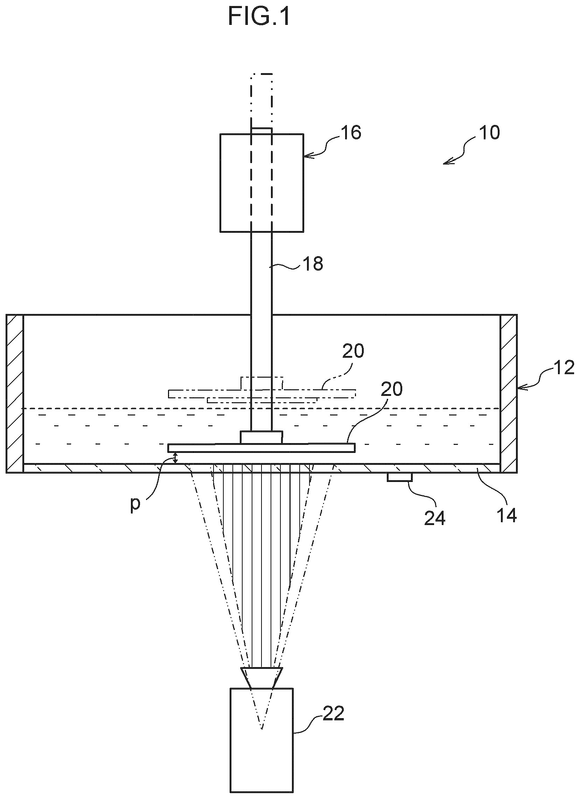

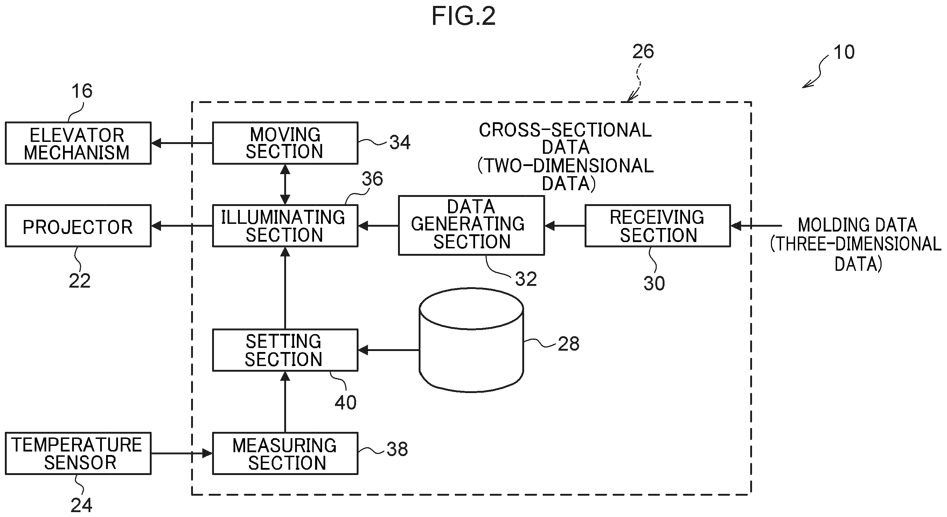

The schematic structure of a stereolithography device 10 relating to the present embodiment is shown in Fig. 1. Further, main portions of the stereolithography device 10 are shown in Fig. 2 in a functional block drawing.

In the present specification, integrated light amount (mJ/cm$^2$), illuminance (mW/cm$^2$), and illumination time period (sec) have the relationship

$$\text{integrated light amount (mJ/cm}^2) = \text{illuminance (mW/cm}^2) \times \text{illumination time period (sec)}.$$

Further, the illuminance varies in accordance with the light bundle that is irradiated from the light source and is the light bundle received at a unit surface area in a unit time (hereinafter also called "light emitting intensity").

The stereolithography device 10 in the present embodiment carries out molding (forming) of a solid molded object (three-dimensional molded object) by using a stereolithography method (light molding method) in a rapid plot typing technique. The stereolithography method carries out molding by using a photocurable composition that is in liquid form as the molding material, and by selectively photocuring the photocurable composition. Note that, in the present embodiment, "photocuring" means changing from a liquid form to a solid by using light energy.

The SLA (Stereo Lithography Apparatus) method and the DLP (Digital Light Processing) method are examples of stereolithography methods.

In the SLA method, laser (e.g., an ultraviolet laser) that is in the form of a spot is illuminated onto a photocurable composition that is in a liquid form, and the photocurable composition is selectively photocured, and a cured layer of a desired shape and thickness (film thickness) is formed on the surface of a molding stage. Next, the stage is moved (raised or lowered), and the photocurable composition of an amount corresponding to the next one layer is supplied to the surface of the cured layer, and, by similarly curing the supplied photocurable composition, a cured layer is layered thereon. A three-dimensional molded object is molded by repeating the operation of layering cured layers.

In the DLP method, by irradiating light (e.g., ultraviolet light) that is in a planar form onto a photocurable composition that is in liquid form, one cured layer of a predetermined thickness is formed. By repeating the layering operation of forming the next cured layer on the surface of the cured layer that has been formed, a three-dimensional molded object is molded.

The stereolithography device 10 is a so-called 3D printer that molds three-dimensional molded objects, and both the SLA method and the DLP method may be applied thereto. As an example, the DLP method is applied to the stereolithography device 10 relating to the present embodiment. Further, the stereolithography device 10 uses a photocurable composition that is in liquid form (hereinafter called photocurable resin liquid). The photocurable resin liquid includes organic material components that, by being polymerized (radically polymerized), become large molecules and form a plastic (synthetic resin), and components that, by absorbing light and being activated, give rise to the polymerization reaction at the organic material components, and the like.

The stereolithography device 10 selectively photocures the photocurable resin liquid in accordance with three-dimensional molding data. At this time, the thickness (film thickness) of one layer of the photocured layers is the layering pitch. Cross-sectional data (sliced data), which is obtained by dividing the molding data by the layering pitch, is used, and the cured layer is formed by illuminating light, which corresponds to the cross-sectional data, onto the photocurable resin liquid and photocuring the photocurable resin liquid.

As shown in Fig. 1, the stereolithography device 10 has a tray 12 that is box-shaped and serves as a liquid tank. The tray 12 is disposed within an unillustrated housing of the stereolithography device 10. The interior of the tray 12 opens toward the upper side. Further, a transparent material (a glass plate or a resin plate or the like) that is light-transmissive is used as a bottom plate 14 of the tray 12, and light can be transmitted through the bottom plate 14.

Note that a predetermined amount of the photocurable resin liquid is pooled within the tray 12, and the photocurable resin liquid can be supplied into the tray 12. Due thereto, at the time when stereolithography that uses the photocurable resin liquid progresses, a decrease in the amount of the photocurable resin liquid that is within the tray 12 is suppressed. Further, the photocurable resin liquid that is pooled within the tray 12 and the photocurable resin liquid that is supplied into the tray 12 are preferably deaerated. Due thereto, polymerization being impeded due to oxygen within the photocurable resin liquid can be suppressed, and the polymerization reaction of the photocurable resin liquid can be carried out stably.

An elevator mechanism 16 that structures a moving section is provided at the upper side of the tray 12. The elevator mechanism 16 has a rod 18. The rod 18 is disposed with the length direction thereof being the vertical direction, and is supported so as to be able to move in the length direction (the vertical direction). The lower end portion of the rod 18 can be inserted into the photocurable resin liquid that is within the tray 12. A platform 20 that is substantially plate-shaped and serves as a molding stage is provided at the lower end portion of the rod 18. The platform 20 is disposed in a direction (the horizontal direction) that intersects the length direction of the rod 18, and is removably attached to the rod 18.

Due to the elevator mechanism 16 moving the rod 18 in the length direction, the platform 20 is moved vertically (raised/lowered). Due thereto, the platform 20 is moved between a molding position (the position shown by the solid lines in Fig. 1), which is within the photocurable resin liquid of the tray 12 and is a predetermined height from the inner surface (the upper surface) of the bottom plate 14, and a position that is further upward than the molding position (e.g., further upward than the liquid surface of the photocurable resin liquid) (the two-dot chain line position in Fig. 1, an interval position). Note that the plane that is substantially horizontal and includes the molding position is the molding plane. At the time when molding is started, the lower side surface (hereinafter called the obverse) of the platform 20 is the molding plane and is disposed at the molding position. Further, at the time of removing the platform 20 from the rod 18, the platform 20 is moved further upward than the interval position.

At the stereolithography device 10, by forming cured layers of the photocurable resin liquid on the obverse (the lower side surface) of the platform 20, a molded object is molded on the obverse of the platform 20. Note that the amount of the photocurable resin liquid that is pooled within the tray 12 is an amount such that the molding position is 5 mm or more deeper than the liquid surface level. Due thereto, the oxygen, which is within the air that contacts the liquid surface of the photocurable resin liquid, impeding polymerization of the photocurable resin liquid at the molding position can be suppressed.

The interval between the obverse of the platform 20 (the surface thereof at the bottom plate 14 side) at the molding position and the upper surface of the bottom plate 14 (the surface thereof at the platform 20 side) is made to be substantially similar to layering pitch p (the thickness of one cured layer) at the time of stereolithography. Further, due to the elevator mechanism 16 raising the molding position of the platform 20 by the layering pitch p each time one cured layer is produced, the space between the upper surface of the bottom plate 14 and the obverse of the cured layer that is layered on the platform 20 becomes an interval that is the layering pitch p.

In the stereolithography method, by making the layering pitch p small, a molded object that has a smooth surface can be formed, but the time required for molding the three-dimensional molded object is long. From the standpoint of obtaining high molding accuracy, the layering pitch p is preferably greater than or equal to 20 $\mu$m and less than or equal to 150 $\mu$m. At the stereolithography device 10, the layering pitch p can be set to the above-described range of 20 $\mu$m, 50 $\mu$m or the like, but, in the following description, explanation is given of the layering pitch p being 100 $\mu$m (0.1 mm) as an example.

A projector 22, which serves as a light illuminating unit and structures an illuminating section, is provided at the lower side of the bottom plate 14 of the tray 12. The projector 22 illuminates light of a predetermined wavelength toward the bottom plate 14 from beneath the tray 12. Light of an arbitrary wavelength (visible light, infrared light or ultraviolet light) can be used as the light that is illuminated by the projector 22. However, it is preferable that the light be of a wavelength at which relatively high energy can be obtained, and, for example, it is preferable that the light be ultraviolet light of a wavelength of 320 nm ~ 420 nm. In the present embodiment, as an example, light (ultraviolet light) of a wavelength of 405 nm is used.

Light emitting elements, which emit light of the aforementioned wavelength and whose illuminance at the time of irradiating light (light emitting intensity) can be varied, are used at the light source of the projector 22. The light source of the projector 22 is formed by, for example, plural light emitting elements such as LDs (laser diodes) or LEDs (light emitting diodes) or the like being arrayed in a planar form.

Optical masking means (means for masking the non-image portions), such as, for example, a planar drawing mask (not illustrated) in which plural digital micromirror shutters are arrayed in a planar form, or the like, is provided at the projector 22. Due to the non-image portions being masked in accordance with two-dimensional image data (the cross-sectional data of the molded object), the projector 22 illuminates light, which is in planar form and corresponds to the cross-sectional data, onto the photocurable resin liquid that is at the bottom plate 14 side of the tray 12 interior (so-called planar exposure). Due thereto, the photocurable resin liquid that is between the platform 20 and the bottom plate 14 (or is between the cured layer of the platform 20 and the bottom plate 14) is selectively photocured, and one cured layer is formed on the platform 20 (or on a cured layer of the platform 20).

A temperature sensor 24, which serves as a measuring means and structures a measuring section, is provided at the stereolithography device 10. Any of various sensors, which directly or indirectly measure the temperature (the liquid temperature) of the photocurable resin liquid within the tray 12 and output an electric signal corresponding to the measured value (the measured temperature), can be used as the temperature sensor 24.

The temperature sensor 24 may measure the temperature of the photocurable resin liquid at any depth within the tray 12, and it is more preferable that the temperature sensor 24 be able to measure the temperature of the photocurable resin liquid that is between the bottom plate 14 and the platform 20 that is the molding region. Further, plural temperature sensors 24 may be provided at different positions, and the respective measurement temperatures or the average value of the measurement temperatures or the like may be used.

For example, an infrared temperature sensor, which is a non-contact-type sensor and measures infrared light emitted from the photocurable resin liquid that is between the platform 20 and the bottom plate 14, is an example of the sensor that measures the temperature of the photocurable resin liquid that is between the platform 20 and the bottom plate 14. As the infrared temperature sensor, a quantum temperature sensor is more preferable than a heat-type temperature sensor, from the standpoints of adaptability and sensitivity. Further, in a case in which an infrared sensor is used, it is preferable to avoid measuring the temperature of the cured layer on the platform 20, and, for example, the temperature of a position, at which there is no cured layer, at a peripheral portion of the platform 20, or the photocurable resin liquid at the outer side of the platform 20, may be measured.

The tray 12 and the photocurable resin liquid that is within the tray 12 are considered to be substantially similar temperatures. Further, the temperature of the tray 12 depends on the temperature within the housing of the stereolithography device 10 in which the tray 12 is disposed (the environmental temperature). From this, the temperature sensor 24 is not limited to a non-contact-type sensor, and any of various types of contact-type sensors may be used such as a thermocouple sensor (a thermocouple utilizing the Seebeck effect), a metal temperature measuring resistor (platinum, nickel), a thermistor (NTC, PTC), an IC temperature sensor (utilizing the temperature characteristics of a silicon transistor), or the like.

In a case in which a contact-type temperature sensor is used, the temperature sensor 24 may be disposed within the photocurable resin liquid that is within the tray 12, and may measure the temperature of the photocurable resin liquid at a non-molding region. Further, the temperature sensor 24 may be mounted to the lower side surface of the bottom plate 14 of the tray 12 or to the outer side surface of a side wall of the tray 12, or may be disposed within the housing and indirectly detect the temperature of the photocurable resin liquid at a non-molding region such as the temperature within the housing (the environmental temperature) or the like. The temperature sensor 24 of the present embodiment is a thermocouple temperature sensor using chromium and nickel, and the temperature sensor 24 is mounted to a region outside of the light illuminating range of the projector 22, at the lower side surface of the bottom plate 14 of the tray 12.

On the other hand, the stereolithography device 10 has a control device 26. The elevator mechanism 16, the projector 22 and the temperature sensor 24 are connected to the control device 26.

The control device 26 has an unillustrated microcomputer at which a CPU, a ROM, a RAM, an input/output interface and the like are connected to one another by busses. Further, a storage section 28 using a non-volatile storage medium such as an HDD, an EEPROM, a flash memory or the like is provided at the control device 26. The storage section 28 is connected to the microcomputer. An operating system (OS) is stored in the ROM and the storage section 28. Further, various types of software are stored, and various types of data are stored, in the storage section 28. The control device 26 is operated due to the CPU of the microcomputer reading-out and executing the OS, and the software that is stored in the storage section 28 is read-out and executed.

A receiving program, a data generating program, a moving program, an illuminating program, a measuring program and a setting program are included among the software that are stored in the storage section 28. The CPU reads-out and executes the receiving program, the data generating program, the moving program, the illuminating program, the measuring program and the setting program. Due thereto, the microcomputer of the control device 26 functions as a receiving section 30, a data generating section 32, a moving section 34, an illuminating section 36, a measuring section 38 and a setting section 40. Note that these software may be acquired via a communication line (a network line) and stored in the storage section 28, or these software may be read-in from storage media on which they are stored, and stored in the storage section 28.

Three-dimensional data of a molded object that is generated by a CAD system, or three-dimensional data of a molded object that that is held in a CAM system that manufactures products on the basis of data generated by a CAD system or the like, can be used for the molding data (three-dimensional data) of the three-dimensional molded object. Further, data, which is obtained by reading and acquiring the shape of a sample of a three-dimensional molded object by a 3D scanner, can be used as the molding data. Note that the molding data is not limited to these, and three-dimensional data that has been generated by an arbitrary method can be used.

A server or the like, in which a CAD system, a CAM system and the molding data are stored, is connected to the control device 26 via an unillustrated communication line (e.g., a local area network), and the molding data can be inputted to the control device 26 via the communication line. Further, a storage medium such as a USB memory or the like can be inserted into and removed from the control device 26, and molding data that is stored in the storage medium may be inputted to the control device 26.

Due to molding data being inputted, the receiving section 30 receives the inputted molding data, and stores the molding data in the storage section 28.

At the stereolithography device 10, at the time of molding a three-dimensional molded object, the layering pitch p is set. Due to the layering pitch p being set, the data generating section 32 divides the molding data, which is stored in the storage section 28, by the interval of the layering pitch p in the height direction (the z-axis direction) of the molded object, and generates cross-sectional data (sliced data for each one cured layer) in two dimensions (e.g., the x-y plane) of the layering pitch p interval.

By operating the elevator mechanism 16, the moving section 34 moves (raises/lowers) the platform 20 between the molding position and the interval position. Further, due to the illuminating section 36 reading-in, in order and from the data generating section 32, cross-sectional data on a layer-by-layer basis (per one layering pitch), control is carried out such that the projector 22 emits light in which the non-image portions are masked in accordance with the cross-sectional data.

The moving section 34 and the illuminating section 36 are operated synchronously with one another. In the state in which the platform 20 has been moved to the molding position, light is illuminated from the projector 22 toward the bottom plate 14 of the tray 12. Due thereto, the photocurable resin liquid that is between the obverse of the platform 20 and the bottom plate 14 of the tray 12 is photocured, and a cured layer of a synthetic resin that corresponds to the cross-sectional data is formed on the obverse of the platform 20.

Further, when one cured layer is formed, the moving section 34 raises the platform 20 to the interval position, and thereafter, lowers the platform 20 to the molding position. Further, at the time of lowering the platform 20, the moving section 34 raises the lowered position (the molding position) of the platform 20 by an amount corresponding to the layering pitch p, and, due thereto, the photocurable resin liquid of an amount corresponding to the layering pitch enters-in between the bottom plate 14 and the cured layer that is formed on the platform 20.

By reading-in the signal outputted from the temperature sensor 24, the measuring section 38 acquires the temperature of the tray 12, and acquires (measures) the temperature (the liquid temperature) of the photocurable resin liquid that is within the tray 12. For example, the setting section 40 reads-in the temperature of the photocurable resin liquid from the measuring section 38 at a timing that is set in advance, as the measurement temperature whose use in control of the integrated light amount described hereinafter is set in accordance with predetermined standards.

Here, for the photocurable resin liquid that is pooled in the tray 12, curing information that expresses the relationship between the temperature of the photocurable resin liquid, the integrated light amount (or the illuminance at the photocurable resin liquid at the time of photocuring, and the thickness (the film thickness) of the cured layer formed by photocuring is acquired by advance measurement or the like. The relationship between temperature of the photocurable resin liquid, film thickness of the cured layer, and integrated light amount is mapped and stored in the storage section 28. The integrated light amount, which is for forming a cured layer of the film thickness, can be set from the temperature of the photocurable resin liquid and the film thickness of the cured layer. Note that the curing information (the map) that is stored in the storage section 28 is stored as a relational expression (a function expression) that, for plural temperatures of the photocurable resin liquid, expresses the relationship between the integrated light amount illuminated onto the photocurable resin liquid and the film thickness of the cured layer.

The setting section 40 acquires the temperature of the photocurable resin liquid at the molding position, on the basis of the measurement temperature of the measuring section 38 and as temperature information. Further, on the basis the temperature information and the curing information that is stored in the storage section 28 and the like, the setting section 40 sets the integrated light amount for forming a cured layer of the layering pitch p, and sets the illuminance or light illumination time period for obtaining the set integrated light amount. Note that, in a case in which the temperature of the photocurable resin liquid is between temperatures stored in the storage section, an integrated light amount or illuminance that corresponds to the measured temperature is set by using an interpolating method such as data interpolation or the like.

Here, the integrated light amount (mJ/cm$^2$), the illuminance (mW/cm$^2$), and the illumination time period (sec) have the following relationship.

$$\text{integrated light amount (mJ/cm}^2) = \text{illuminance (mW/cm}^2) \times \text{illumination time period (sec)}$$

The illuminating section 36 controls the projector 22 such that the integrated light amount that is set at the setting section 40 is obtained.

Molding processing at the stereolithography device 10 is described hereinafter as operation of the present embodiment.

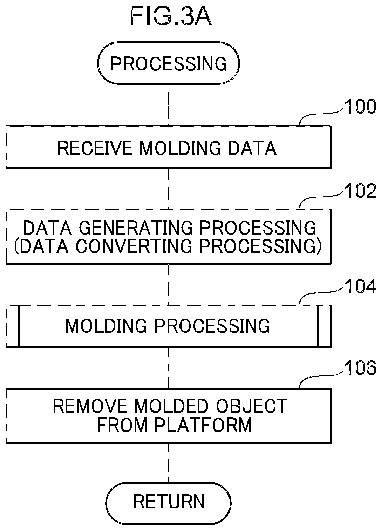

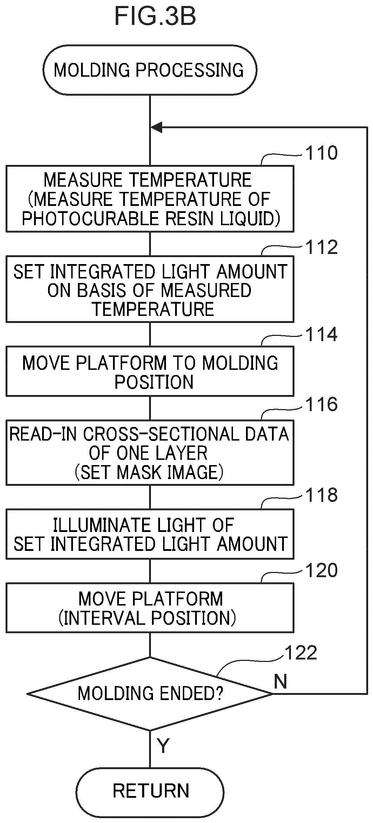

An overview of the processing at the stereolithography device 10 is shown in a flowchart in Fig. 3A. An overview of the molding processing is shown in a flowchart in Fig. 3B.

The flowchart of Fig. 3A is executed due to an unillustrated power switch of the stereolithography device 10 being turned on and the control device 26 starting operation. In initial step 100, molding data is received, and the received molding data is stored in the storage section 28. In next step 102, the molding data is read-out from the storage section 28, and the read-out molding data is divided at intervals of the layering pitch p, and cross-sectional data is generated.

Thereafter, for example, due to an unillustrated start switch that is provided at the stereolithography device 10 being operated, and execution of molding processing being instructed, the routine moves on to step 104, and the molding processing is started, and a molded object is molded on the obverse of the platform 20. Further, when the molding processing ends, in step 106, the molded object is removed from the obverse of the platform 20. Note that finishing treatments are carried out on the molded object that is molded by the stereolithography device 10, such as the photocurable resin liquid is washed-off of the surface thereof, and, as needed, light is illuminated thereon such that the surface is photocured, and the like.

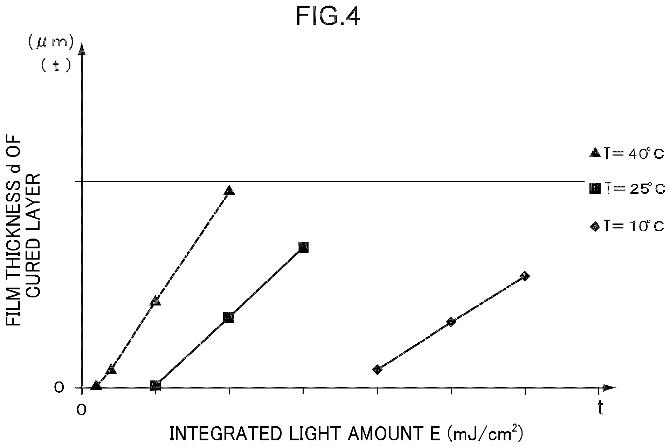

Results of measurement of photocured film thickness (film thickness of the cured layer) d ($\mu$m) with respect to integrated light amount E (mJ/cm$^2$) of the light illuminated on the photocurable resin liquid, for plural temperatures T (°C) of the photocurable resin liquid, are shown in Fig. 4. Note that Fig. 4 illustrates cases in which the temperature T of the photocurable resin liquid is T = 10°C, 25°C and 40°C.

Due to light being illuminated onto the photocurable resin liquid, the photocuring reaction progresses due to the energy of the illuminated light (integrated light amount E (mJ/cm$^2$)). At this time, as shown in Fig. 4, for the photocurable resin liquid, the film thickness d of the cured layer becomes thicker as the integrated light amount E becomes higher. Further, for the photocurable resin liquid, due to the temperature T being higher, the film thickness d of the cured layer that is formed by photocuring is thick as compared with a case in which the temperature T is low.

From this, at the stereolithography device 10, the temperature, which is for use in setting the temperature information that is used in controlling the integrated light amount, can be measured by the temperature sensor 24 for the photocurable resin liquid that is pooled in the tray 12. Further, at the stereolithography device 10, the temperature T, which is the temperature information at the time of curing the photocurable resin liquid, may be acquired from the measurement temperature. The temperature T (temperature information) may be the temperature of the photocurable resin liquid at the molding region of the obverse of the platform 20.

Moreover, in the stereolithography device 10, the relationship between the temperature T for the photocurable resin liquid, the integrated light amount E of the illuminated light, and the film thickness d of the cured layer is measured in advance, and is stored in the storage section 28. The control device 26 sets the integrated light amount E in accordance with the temperature T of the photocurable resin liquid. Further, the integrated light amount (mJ/cm$^2$) is the light illuminance (mW/cm$^2$) $\times$ illumination time period (sec). From the integrated light amount E and the light emitting time period (illumination time period) of the light, the control device 26 controls the illuminance (light emitting intensity) of the light emitted from the projector 22 so as to obtain the integrated light amount E that has been set.

Further, at the time of layering a cured layer, the next cured layer must be adhered to a cured layer that has already been formed. Further, there are cases in which the photocurable resin liquid that forms the cured layer contracts in the layer thickness direction by being photocured.

The integrated light amount is preferably adjusted to a value that is suited for forming a cured layer of the film thickness d that is slightly thicker than the layering pitch p (e.g., at the time of forming a cured layer whose film thickness d is 100 $\mu$m, an integrated light amount that is suited to a film thickness d of 110 $\mu$m or the like is set). It is particularly preferable that the integrated light amount be adjusted to a value that is within a range of 5% or more and 30% or less larger than the layering pitch p.

The flowchart of Fig. 3B is executed by the routine of Fig. 3A moving on to step 104 of Fig. 3A. In initial step 110, the temperature information (temperature T) for forming the cured layer is acquired from the temperature of the photocurable resin liquid measured by the temperature sensor 24. Or, in step 110, the temperature information, which is obtained from the measurement temperature whose use in control of the integrated light amount is set in accordance with predetermined standards, of the measurement temperatures measured by the temperature sensor 24 is acquired for the temperature of the photocurable resin liquid. In step 112, on the basis of the acquired temperature information, the integrated light amount E of the light needed in order to form a cured layer of a film thickness of an amount corresponding to the layering pitch p is set. Due thereto, the illuminance by which the integrated light amount E is obtained is set.

Further, in the control device 26, step 114 and step 116 are executed in parallel with the processings of steps 110, 112. In step 114, the platform 20 is lowered to the molding position. In step 116, the cross-sectional data of one layer is read-in, and setting is carried out such that an image, in which the non-image portions are masked in accordance with the cross-sectional data, is displayed by the projector 22.

Thereafter, in step 118, the projector 22 is operated (is made to emit light) such that light of the set integrated light amount E (light by which the integrated light amount E is obtained) is illuminated. Due thereto, the light emitted from the projector 22 is illuminated onto the photocurable resin liquid that is between the platform 20 and the bottom plate 14, and the portion of the photocurable resin liquid onto which the light is illuminated is selectively photocured, and a photocured layer (cured layer) that corresponds to the cross-sectional data is formed on the obverse of the platform 20 (between the platform 20 and the bottom plate 14).

When one photocured layer is formed, in next step 120, the control device 26 moves the platform 20 to the interval position. Further, in step 122, it is judged whether or not molding processing is completed for one set of molding data. At this time, if molding processing is not completed, the judgment in step 122 is negative, and the routine moves on to step 110, and the photocuring processing corresponding to the next cross-sectional data is executed.

Due thereto, light, which corresponds to the integrated light amount E that is set in accordance with the temperature of the photocurable resin liquid pooled in the tray 12, is illuminated, and a cured layer of the photocurable resin liquid is formed. Accordingly, the molded object that is molded by the stereolithography device 10 is formed highly accurately, regardless of the temperature of the photocurable resin liquid and the environmental temperature.

Note that there are cases in which the photocurable resin liquid contracts slightly by being photocured, and the surface area of the cured layer contracts slightly more than the surface area in the cross-sectional data. From this, one cured layer may be formed generating two-dimensional data of the peripheral portion of the cross-sectional data, and illuminating light that corresponds to the cross-sectional data, and thereafter, illuminating light that corresponds to the two-dimensional data of the peripheral portion of the cross-sectional data.

Note that the above-described present embodiment is an example, and the present invention is not limited to the above-described embodiment. Namely, in the present invention, the respective structural elements may be changed appropriately. For example, temperature measurement of the photocurable resin liquid may be carried out and the temperature information may be set in parallel with the molding of the respective cured layers, and, at the time of molding the next cured layer, the integrated light amount of the light emitted from the projector 22 may be set, or the temperature information may be set at a predetermined timing. In detail, although described later, for example, temperature measurement of the photocured resin liquid may be carried out in parallel with the molding of a cured layer, and the temperature information may be set in accordance with the measured temperature at a time when the measured temperature (a case in which the actually measured value of the measured temperature is used as the measurement temperature) changes. It suffices to set the integrated light amount on the basis of temperature information that is newly set. Further, the difference between the temperature information of immediately before (or the measured temperature used in setting the temperature information) and the measured temperature may be set as a threshold value, and the temperature information may be set in accordance with the measured temperature at a time when that threshold value exceeds a given value.

Further, with regard to the illuminance of the light that is illuminated, a reference value of the illuminance may be set on the basis of a reference temperature, and, on the basis of the temperature difference between the reference temperature and the actual temperature of the photocurable resin liquid, the reference value may be corrected and the illuminance set.

Further, in the present embodiment, the integrated light amount of the light that the projector 22 illuminates is controlled on the basis of the temperature of the photocurable resin liquid. However, it suffices for the integrated light amount to be controlled in accordance with the temperature of the photocurable resin liquid. Therefore, the integrated light amount that is needed may be obtained by making the illuminance of the light be a predetermined illuminance that is set in advance, and controlling the light emitting time period (the illumination time period).

Further, the light emitting time period (the illumination time period of the light) may be made to be a time period that is set in advance, and a predetermined integrated light amount (an integrated light amount that is determined in accordance with the temperature) may be obtained by controlling the illuminance. Or, both the illuminance and the light emitting time period (illumination time period) may be controlled so as obtain a predetermined integrated light amount. Namely, because the relationship integrated light amount $(mJ/cm^2)$ = illuminance $(mW/cm^2)$ × illumination time period (sec) exists between the integrated light amount $(mJ/cm^2)$, the illuminance $(mW/cm^2)$ and the illumination time period (sec), it suffices to control at least one of the illuminance and the illumination time period. Further, because controlling the illuminance includes controlling the brightness of the light that is illuminated (the light emitting intensity), controlling the integrated light amount includes the meaning of controlling the illumination energy.

Further, in the present embodiment, the molded object is molded at the lower side surface of the platform 20 that is substantially plate-shaped and serves as the molding stage. However, light may be illuminated on, and the molded object may be molded on, the upper side surface of the molding stage.

On the other hand, there are cases in which the surface temperature of the molding surface differs in accordance with the position (the region) on the molding surface. Therefore, a method is considered of dividing the molding surface into plural regions, and illuminating, per region, light that becomes an integrated light amount that corresponds to the temperature of that region. However, it is difficult to strictly carry out control for all of the regions such that lights of integrated light amounts corresponding to the respective temperatures of the plural regions are illuminated, and, on the contrary, it is quite possible that the problem that reproducibility cannot be obtained may arise.

Here, in the present embodiment, among the measurement temperatures, a measurement temperature, whose use in control of the integrated light amount is set in accordance with predetermined standards, is used. On the basis of the temperature information obtained from this measurement temperature that has been set, light is illuminated onto the photocurable resin liquid (the photocurable composition), and, due thereto, good reproducibility can be obtained. In this case, it is preferable that the measurement temperature that is used in controlling the integrated light amount is a measurement temperature that takes into consideration the molded object and the molding environment and by which it is easy to obtain higher reproducibility. For example, depending on the structure (the shape) of the molded object and the peripheral environment, a region or a layer at which it is easy for a temperature difference to arise may exist within the molding region. If the measurement temperature of such a region or layer at which it is easy for a temperature difference to arise is used as is in the control of the integrated light amount, there are cases in which high reproducibility cannot be obtained. From this, a form, in which the measurement temperature of a region at which it is difficult for a temperature change to arise, is used as the temperature information in the control of the integrated light amount, is an example of one form.

The predetermined standards for setting the measurement temperature as temperature information for use in control of the integrated light amount may be standards that are selected, for example, from the standpoints of the threshold value for the measurement temperature, the molded place (the layer or the divisional region on the molding surface that is to be cured), the time period (e.g., the time period from the start of molding) and the like, as standpoints for obtaining good reproducibility. Or, the aforementioned predetermined standards may be standards for carrying out weighting of a measurement temperature that is selected on the basis of any of the above-described standpoints.

For example, the setting section 40 may further have a measurement temperature processing section that, among the measurement temperatures, sets, in accordance with predetermined standards, the measurement temperature that is to be used in control of the integrated light amount. The measurement temperature processing section may set in advance the place and the time period that are to be used in control of the integrated light amount, among the measurement temperatures. The place that is to be used in control of the integrated light amount means a given region (e.g., a specific region in the two-dimensional molding plane, a specific layer that is molded, a combination of these, or the like) of the molding region. For example, in a case in which a specific region can be understood as being a place where it is difficult for a change in the temperature of the periphery to occur, the measurement temperature of such a place (that specific region) may be made to be the measurement temperature whose use in controlling the integrated light amount is set in accordance with predetermined standards. In this way, in a case in which changes in temperature during molding can be predicted, it is useful to set in advance a place and a time period that are to be used in controlling the integrated light amount.

Further, the time period that is used in control of the integrated light amount may be one or two or more time periods among specific time periods that are continuous during molding, or may be one or two or more times (points in time) among specific times. For example, in a case in which minute temperature variations are repeated during molding, temperature information, which corresponds to the measurement temperature of a specific time period or a specific time (e.g., the measurement temperature immediately before molding, or the like) may be used in the control of the integrated light amount, and good reproducibility is thereby obtained. Further, in a case of large temperature changes, for example, temperature information, which is set by using the measurement temperature at a given time among plural times during molding, may be used in the control of the integrated light amount, and good reproducibility is thereby obtained.

At the measurement temperature processing section, the measurement temperature that is used in controlling the integrated light amount can be set as the temperature information, while molding is carried out. For example, there are cases in which minute temperature changes are repeated during molding at each layer that is cured, or there are cases in which the temperature differs at each region on the molding surface (the regions obtained by dividing the molding surface into plural regions), or the like. In these cases, if, in accordance with measurement temperatures that have minute differences, the temperature information of all of the regions are set per region and are used in controlling the integrated light amount, there are cases in which good reproducibility cannot be obtained (there are cases in which the reproducibility deteriorates).

From this, in a case in which minute temperature changes are repeated during molding, a specific threshold value may be set for the measurement temperature, and the temperature information may be set in accordance with the measurement temperature at a time when this threshold value is exceeded. For example, in a case in which the measurement temperature changes by a given temperature from the measurement temperature that was used in setting the temperature information of immediately before (e.g., in a case in which the measurement temperature changes by 1°C or more), the temperature information may be newly set by using this measurement temperature. Further, in a case in which a prescribed temperature (e.g., 25°C or the like) is specified as the threshold value in advance, and the measurement temperature changes from this temperature by a given temperature, the temperature information may be newly set by using this measurement temperature. Note that plural threshold values may be provided, and, for example, a threshold value may be provided for each 1°C.

Further, as the temperature information, the actually measured temperature (measured temperature) that is measured by the temperature sensor 24 may be used as is as the measurement temperature, or a predicted temperature obtained by another means (e.g., a temperature obtained by weighting, or a temperature predicted from other parameters) may be used as the measurement temperature. In a case in which minute temperature changes arise frequently in the measured temperature due to the environment of the temperature measurement, there are cases in which it is easier to obtain reproducibility by using a predicted temperature as the measurement temperature. In such a case, it is effective to use a predicted temperature as the measurement temperature. Further, at the setting section 40, it may be decided upon in advance whether a measured temperature that is an actually measured value is to be used or whether a predicted temperature is to be used as the measurement temperature, or an algorithm, which selects which is to be used as the measurement temperature in accordance with predetermined standards, may be used at the setting section 40. For example, the setting section 40 may set (predict) the predicted temperature by using a surface area ratio, which is described later, as the standard. Further, in a case in which the predicted temperature and the measured temperature (actually measured value) are offset by a given temperature or more, the setting section 40 may select the measured temperature (actually measured value) may be selected as the measurement temperature. By carrying out setting in this way, high accuracy of molding can be obtained even in a case in which the temperature cannot be predicted correctly.

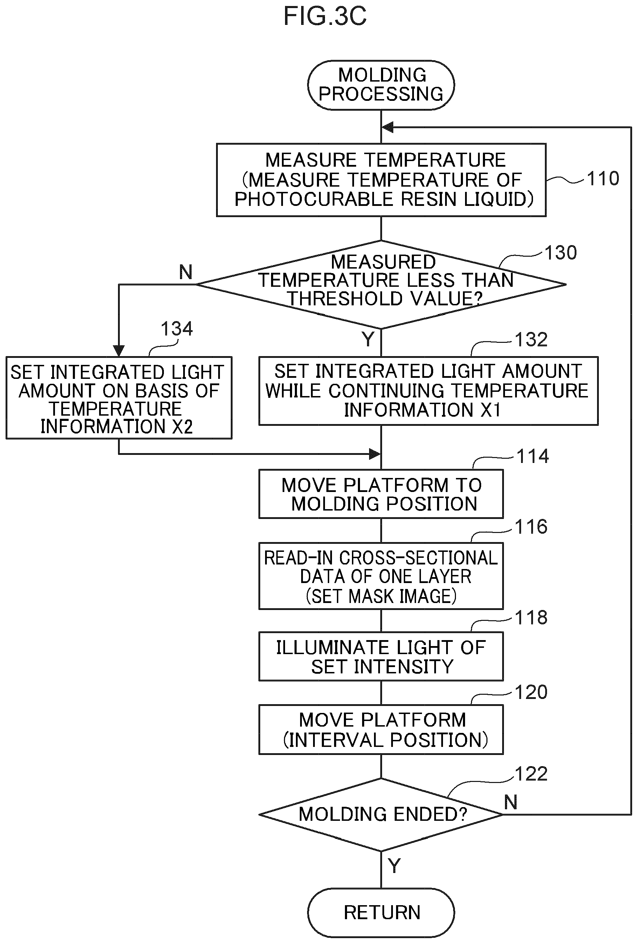

An example of a case in which the temperature information is set by using a threshold value as a reference is shown in a flowchart in Fig. 3C. Fig. 3C is another example that is applied to the processing of step 112 of Fig. 3B at the setting section 40.

In the flowchart of Fig. 3C, the measured temperature is used as the measurement temperature, and the integrated light amount is controlled by using temperature information X1 that is set in accordance with the measurement temperature. In this flowchart, at the time of forming the next cured layer, in step 130, it is confirmed whether or not the measured temperature (measurement temperature) is less than a threshold value. If, for example, the measured temperature is less than the threshold value, the judgment in step 130 is affirmative, and the routine moves on to step 132. In step 132, the measured temperature up until immediately before is used as the measurement temperature, and setting of the integrated light amount is carried out while continuing to use as is the temperature information X1 of immediately before that was set in accordance with the measurement temperature.

In contrast, in a case in which the measured temperature varies, by a given value, from the temperature that was set as the threshold value, the judgment in step 130 is negative, and the routine moves on to step 134. In step 134, the measured value that has becomes greater than or equal to the threshold value is made to be the new measurement temperature, and the integrated light amount is set on the basis of temperature information X2 that is set in accordance with the new measurement temperature. Note that the new temperature information X2 is retained as the temperature information X1. Further, the threshold value may be a temperature value that corresponds to the measurement temperature, and not the value of the amount of change in (the changed temperature of) the measured temperature.

Further, for the temperature information, the measurement temperature may be weighted in accordance with the cured layer to be layered or the measured temperature, and control of the integrated light amount may be carried out by using temperature information that is set in accordance with the weighted measurement temperature. It is preferable to carry out the weighting so as to easily reflect the measurement temperature of an important region (e.g., a region that easily reflects overall the temperature of the molded object (a region where the width of the temperature change is small, a region where the surface area ratio is high, or the like) among the regions on the molding surface, such that it is easy to obtain good reproducibility.

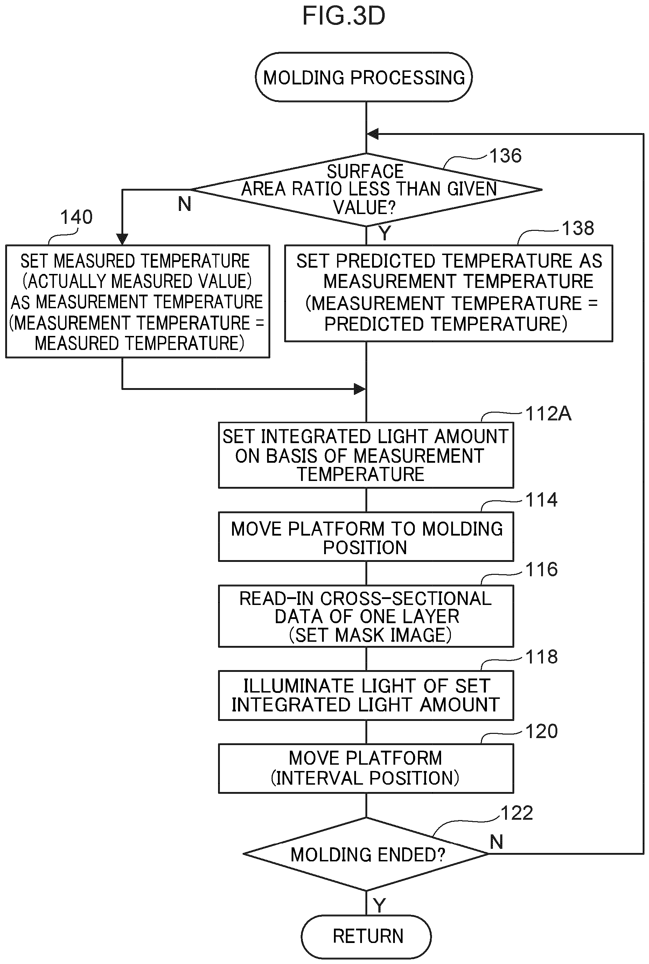

An example of processing that includes setting of the measurement temperature, whose reference is the surface area ratio, is shown in a flowchart in Fig. 3D. Fig. 3D is another example that is applied to the processings of steps 110, 112 of Fig. 3B. Note that the surface area ratio is the proportion (percentage) of the surface area of the cured layer at a predetermined region (e.g., a region that is set in advance such as the moldable region or the like) with respect to the entire surface area. The surface area ratio of each cured layer is computed at the setting section 40 on the basis of the cross-sectional data.

In the flowchart of Fig. 3D, in initial step 136, for the surface area ratio of the cured layer that is to be formed next, it is confirmed whether or not the surface area ratio is less than a given value that is set in advance. Here, for example, if the surface area ratio is less than the given value, the judgment in step 136 is affirmative, and the routine moves on to step 138. In step 138, the predicted temperature is set as the measurement temperature. In contrast, if the surface area ratio is greater than or equal to the given value, the judgment in step 136 is negative, and the routine moves on to step 140. In step 140, the measured temperature (actually measured value) is set as the measurement temperature.

In next step 112A, the integrated light amount is set on the basis of the set measurement temperature, i.e., the predicted temperature (the temperature information may be set in accordance with the predicted temperature, and the integrated light amount may be set on the basis of the set temperature information). In this way, at the setting section 40, in a case in which the surface area ratio exceeds the given value, the measured temperature is set as the measurement temperature, and processing can be carried out such that this measurement temperature is used in controlling the integrated light amount. A more concrete form is described hereinafter.

In this present embodiment, for the temperature information (temperature T) that is used in photocuring the photocurable resin liquid, the measurement temperature of the temperature sensor 24 may be used as is. In this case, it suffices to generate, in advance, curing information of the photocurable resin liquid that corresponds to the measurement temperature of the temperature sensor 24, and to store the curing information in the storage section 28 in advance. For example, in a case in which the temperature information is set in accordance with the measurement temperature of a specific cured layer, the temperature information may be set by using a measured temperature (obtained by) directly or indirectly measuring the temperature (liquid temperature) of the photocurable resin liquid within the tray 12 by the temperature sensor 24 immediately before the start of molding of or during the molding of that specific cured layer. In this case, the measurement temperature may be the temperature of either a molding region or a non-molding region. Further, any of the aforementioned contact sensors or non-contact sensors may be used as the measuring means at the measuring section.

Further, as the temperature information, the molding region that corresponds to the obverse of the platform 20 at the molding position may be divided into plural regions in two-dimensional directions (the x-y directions), and temperature information may be acquired or set for each of the divisional regions. Further, the temperature information may include information in the film thickness direction (the z direction) of the cured layer. Temperature information in the film thickness direction (the z direction) means temperature information for the layer that is to be cured (the molding region at which a cured layer is to be newly formed). Therefore, in a case in which temperature information in the film thickness direction is not distinguished from the temperature information in the two-dimensional directions (the x-y directions), the measurement temperature, which is obtained by indirectly or directly measuring the photocurable resin liquid within the tray 12 by the temperature sensor 24 immediately before the start of molding of or during the molding of the aforementioned specific cured layer, is used as the measurement temperature (the temperature in the film thickness direction) of that cured layer (the layer of the photocurable resin liquid from which the cured layer is formed), and the temperature information can be set in accordance with this measurement temperature. In a case in which the temperature information in the film thickness direction is distinguished from that in the two-dimensional directions (the x-y directions), the temperature information can be set in accordance with the measurement temperature immediately before the start of molding of or during the molding of the surface (molding surface) of the divisional region in the two-dimensional directions at that cured layer. In this case, it is preferable to use an infrared ray sensor as the temperature sensor.

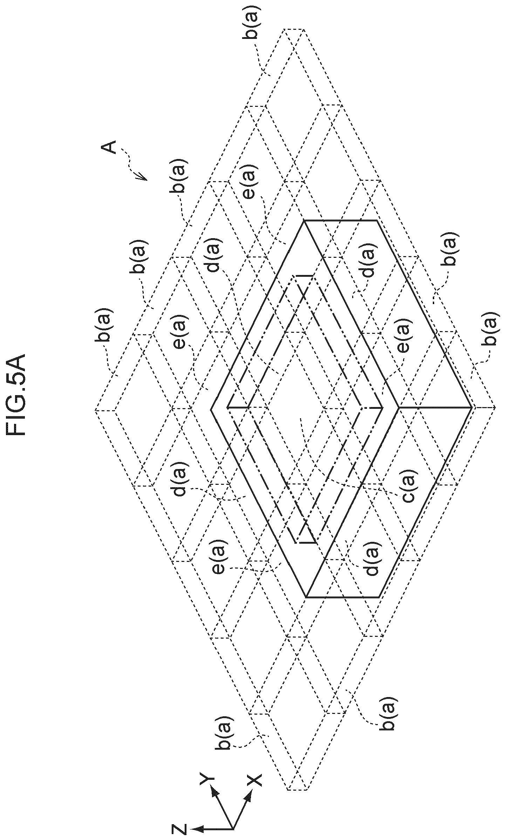

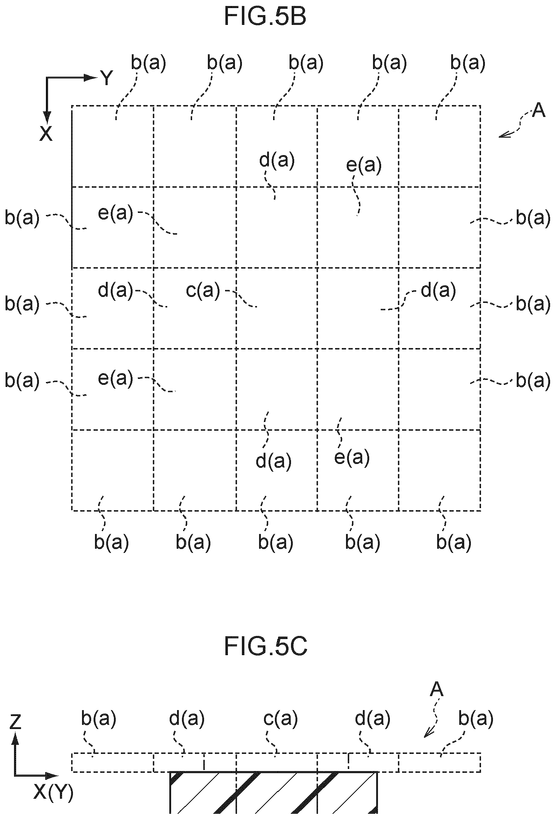

Divisional regions a, which are obtained by three-dimensional molding region A on the obverse of the platform 20 being divided into plural regions in two-dimensional directions (the x-y directions) is shown in Fig. 5A. Further, the molding region A of Fig. 5A is shown in Fig. 5B in a plan view seen from the bottom, and the molding region A of Fig. 5A is shown in Fig. 5C in a cross-sectional view seen from the side (a cross-sectional view along the x direction or the y direction). Note that the z direction is the film thickness direction of the cured layer corresponding to the layering pitch p, and, in Fig. 5, the bottom plate 14 side, as seen from the platform 20 side, is the upper side. Further, in Fig. 5, portions that have already been molded are shown by the solid lines, and portions (cured layers) to be molded next are shown by the two-dot chain lines.

As shown in Fig. 5A, at each of the plural divisional regions a that is obtained by dividing the region (the molding region), at which one cured layer is to be formed, longitudinally and laterally along the molding surface (in Fig. 5A, the two-dimensional surface running along the x-y directions), the measurement temperature of each divisional region a on the molding surface can be distinguished, and respective temperature information for the plural divisional regions a are thereby set. In this case, it is preferable to use an infrared ray sensor in the measuring of the temperatures of the respective divisional regions a on the surface of the molding surface.

Here, as shown in Fig. 5A and Fig. 5B, in a case in which the plural divisional regions a, which are obtained by dividing the three-dimensional molding region A in two-dimensional directions, are categorized by surface area ratio, they become divisional regions b, c, d, e, and the magnitudes of the surface area ratios thereof are c > d > e > b. Note that the divisional regions b, c, d, e of the divisional regions a are expressed as b(a), c(a), d(a), e(a) respectively in Fig. 5A, Fig. 5B, Fig. 5C.

The plural divisional regions a may respectively be regions corresponding to pixels in the cross-sectional data that is used in stereolithography. Further, it is preferable that the plural divisional regions a are regions of plural pixels. Due thereto, there is a low number of the divisional regions a, and an increase in the processing load in the exposure control can be suppressed.

In the exposure control, after temperature information is acquired for each of the divisional regions a, an integrated light amount may be set for each of the divisional regions a, and light illumination that is based on the integrated light amount set for each of the divisional regions a may be carried out. However, in order to obtain good reproducibility, it is preferable to, at some of the divisional regions a, use temperature information that is set in accordance with predetermined standards in the control of the integrated light amount, and not use the measurement temperature as is as the temperature information (including temperature information that is set by using the measurement temperature as is). For example, at the divisional region a at which it is difficult for the temperature to be stable, the temperature information may be set by using the measurement temperature of any of the divisional regions a at which it is easy for the temperature to be stable. Further, in the exposure control, the temperature information (or measurement temperature) of each of the divisional regions a may be acquired, and temperature information, which is set by weighting the temperature information (or measurement temperature) acquired for each of the divisional regions a, may be used. Further, in the exposure control, instead of using temperature information that has been weighted per divisional region a, one temperature information that is to be used for all of the divisional regions a may be acquired, and the acquired one temperature information may be used.

Further, there are cases in which regions at which a cured layer is not to be formed (the respective divisional regions b at the outer peripheral side in Fig. 5A~5C) exist among the divisional regions a. In this case, the divisional regions a, at which at least some of which the cured layer is to be formed (the regions other than divisional regions b, i.e., divisional regions c, d, e), may be selected, and temperature information may be acquired for the selected divisional regions a, and setting of the integrated light amount on the basis of the acquired temperature information, and light illumination based on the set integrated light amount, may be carried out.

Further, there are cases in which regions, at which cured layers are to be formed in succession, and regions, at which a cured layer is to be newly formed, both exist among the plural divisional regions a. Further, heat is generated in the photocurable resin liquid due to the photocuring reaction. From these, for the divisional regions c, d (refer to Fig. 5C) and the like at which cured layers are to be formed in succession, the temperature information may be set by carrying out weighting on the basis of the number of continuous cured layers or the time period over which the cured layers are to be formed in succession, or the like. In particular, it is preferable to carry out weighting for divisional regions c and the like at which substantially all of the regions thereof are to be cured layers. The weighting may be such that, for example, the higher the number of continuous cured layers or the longer the time period, the higher the temperature information.

Further, the temperature information per divisional region a may be set so as to include the surface area ratio of the cured layer to be formed at the corresponding region. The higher the surface area ratio of the cured layer to be formed, the greater the amount of the photocurable resin liquid that is to be photocured. Therefore, the heat generation and the like at the time of curing the photocurable resin liquid at the divisional region may be taken into consideration, and the temperature information of a divisional region having a high surface area ratio may be set to be higher than the temperature information of a low surface area ratio.

On the other hand, in order to obtain good reproducibility, the temperature information of the divisional regions a that have high surface area ratios (e.g., the divisional regions c, d) may be set to be lower than that of the divisional regions a that have low surface area ratios (e.g., the divisional regions b, e). For example, measurement temperatures of the divisional regions a (e.g., the divisional regions c, d) that have high surface area ratios (e.g., surface area ratios of greater than or equal to 70%) may be selected, and the temperature information may be set by using the average value of the measurement temperatures thereof. Note that, in the present embodiment, the surface area ratio is the proportion (percentage) of the surface area of the cured layer that is formed at a divisional region a, with respect to the surface area of that divisional region a on the molding surface.

Further, it is thought that the divisional regions a that are adjacent to one another are affected by one another's heat. Therefore, the temperature information of divisional regions c, which are surrounded by molded divisional regions d and divisional regions e (refer to Fig. 5A ~ Fig. 5C) and the like, and of divisional regions d that contact the divisional regions c that have a high surface area ratio, may be set to be high.

Moreover, the temperature information is not limited to being set per divisional region a, and the integrated light amount is not limited to being set per divisional region a on the basis of the set temperature information. A divisional region at which it seems that the temperature information thereof will become a reference (e.g., from the standpoint of obtaining good reproducibility, a divisional region a at which it is relatively difficult for temperature changes to arise) may be set, and temperature information of each divisional region a may be set by using the temperature information of the set divisional region a as a reference.

One or plural divisional regions a, which are selected from, for example, divisional regions a whose surface area ratio of the cured layer to be formed is a predetermined value or greater (e.g., 70% or greater), may be used as the divisional region a whose temperature information is used as the reference. Further, in a case in which temperature information differ between divisional regions a whose temperature information are used as the reference, the average (average value) of the temperature information may be used in the control of the integrated light amount of the entirety of the plural divisional regions a (the molding region A).

In the same way as described above, the temperature information may be set in the film thickness direction (the z direction) in accordance with predetermined standards and from among the measurement temperatures. For example, from the standpoint of obtaining good reproducibility, for 50% of the entirety (e.g., one time for each two layers, or five continuous layers among ten layers, or the like), the temperature information may be set by using the measurement temperatures immediately before molding starts or during molding, from among the measurement temperatures immediately before molding starts or during molding for all of the layers that are to be cured.

EXAMPLES

Examples using the stereolithography device 10 relating to the present embodiment are described hereinafter.

In the Examples, a photocurable resin composition, which was obtained by mixing together 1000 parts by weight of bisphenol A epoxy diacrylate (EO = 4 mol) and 20 parts by weight of bis(2,4,6-trimethylbenzoyl)-phenylphosphine oxide, was used as the photocurable resin liquid.

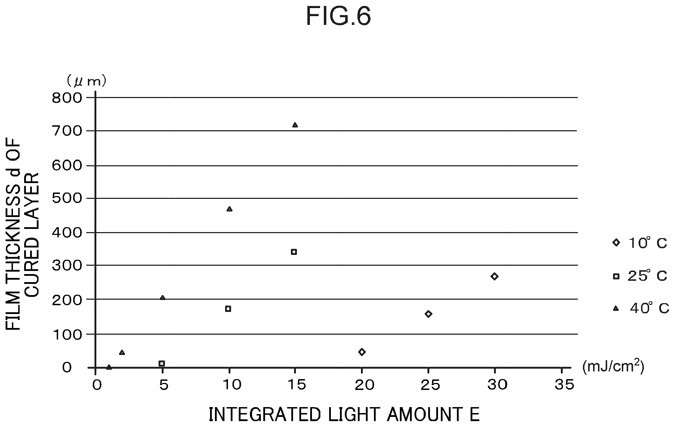

Further, in the Examples, film thickness d of the cured layer with respect to the integrated light amount E at each of 10°C, 25°C and 40°C was measured for the above-described photocurable resin liquid. Note that an LED light source of a wavelength of 405 nm was used for the light source of the light illuminated onto the photocurable resin liquid, and measurement of the integrated light amount was carried out by using the accumulated UV meter UIT-250 manufactured by Ushio Inc. and the light receiver UVD-S405 manufactured by Ushio Inc., and the results of measurement are shown in Table 1 and Fig. 6.

[Table 1]

| integrated light amount E (mJ/cm$^2$) | film thickness ($\mu$m) of cured layer | | |
|---|---|---|---|
| | 10°C | 25°C | 40°C |
| 1 | | | 10 |
| 2 | | | 50 |
| 5 | | 6 | 215 |
| 10 | | 170 | 480 |
| 15 | | 340 | 730 |
| 20 | 45 | | |
| 25 | 160 | | |
| 30 | 270 | | |

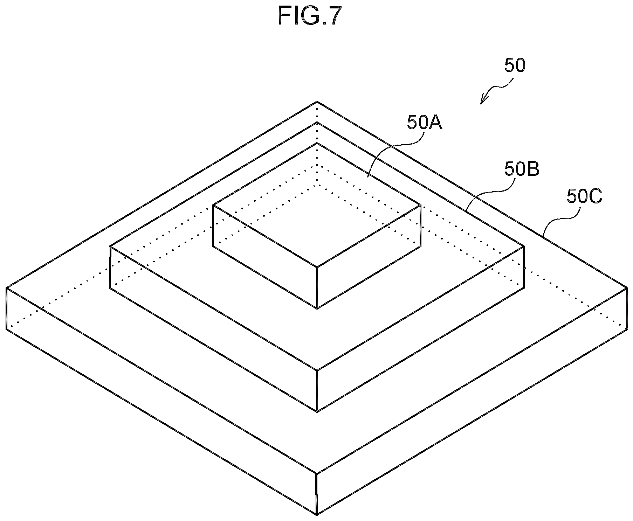

Further, in the present Examples, molding is carried out by using predetermined molding data. A molded object 50 that is expressed by molding data is shown in a perspective view in Fig. 7. The molded object 50 shown in Fig. 7 is structured by a rectangular parallelepiped 50A that has a square plane of 20 mm × 20 mm and a thickness of 5 mm, a rectangular parallelepiped 50B that has a square plane of 40 mm × 40 mm and a thickness of 5 mm, and a rectangular parallelepiped 50C that has a square plane of 60 mm × 60 mm and a thickness of 5 mm. Further, the molded object 50 is a stacked shape of three levels in which the center lines of the square planes of the rectangles 50A, 50B, 50C are coaxial.

Here, in Example 1, Example 2 and a Comparative Example, molding is carried out in accordance with the same molding data that is presented by the molded object 50, by using the above-described photocurable resin composition as the photocurable resin liquid.

<Example 1>

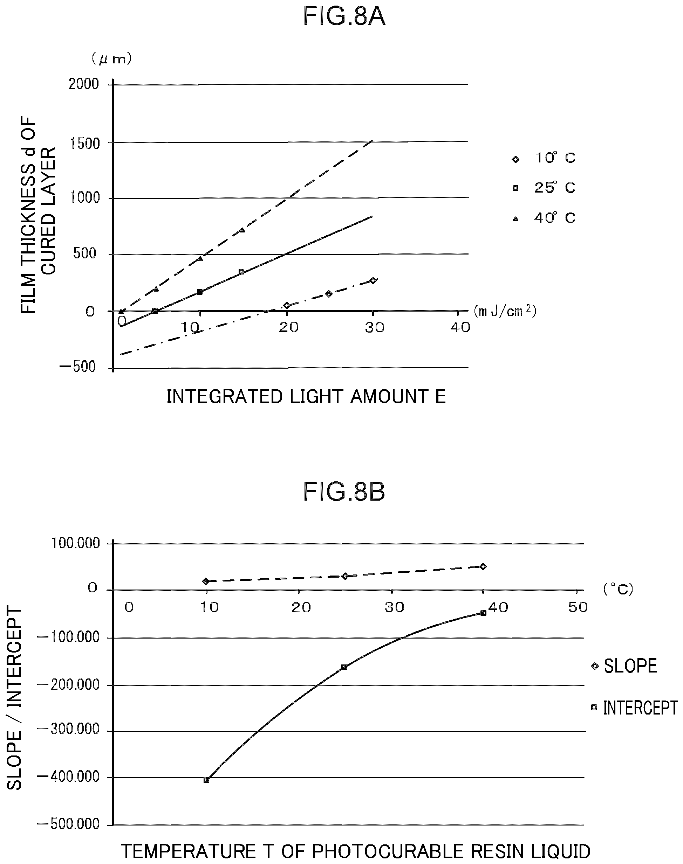

The linear functions (first order functions) shown in Fig. 8A were set for the results of measurement of the photocurable resin composition. The slopes and intercepts of the linear functions at temperatures of 10°C, 25°C, 40°C respectively are shown in Table 2 and Fig. 8B.

In Fig. 8A, the film thickness d of the cured layer with respect to the integrated light amount E at each temperature, approximated by a linear function (first-order function: y = ax+b), is as follows (where y is the cured layer film thickness d, and x is the integrated light amount E). Further, coefficient of determination $R^2$ at the time of evaluating the measured value is also listed for each of the correlation functions. Note that the coefficient of determination $R^2$ means the square of the correlation function R.

10°C:

$$y = 22.5x - 404.17$$

($R^2$ = 0.9998)

25°C:

$$y = 33.4x - 162$$

($R^2 = 0.9999$)
40°C:

$$y = 51.997x - 46.181$$

($R^2 = 0.9996$)

From this, the slope and the intercept of the linear function at each of temperatures 10°C, 25°C, 40°C were obtained, and the obtained slopes and intercepts are shown in Table 2 and Fig. 8B.

[Table 2]

| temperature (°C) | slope | intercept |
|---|---|---|
| 10 | 22.500 | -404.167 |
| 25 | 33.400 | -162.000 |
| 40 | 51.997 | -46.181 |

From Table 2 and Fig. 8B, the slope and intercept can be approximated by the following quadratic functions (where x is the temperature).
slope:

$$y = 0.0171x2 + 0.128x + 19.509 \quad …(1)$$

($R^2 = 1$)
intercept:

$$y = \text{-}0.2808x + 25.971x - 635.8 \quad …(2)$$

($R^2 = 1$)

Here, in Example 1, the film thickness d of the cured layer with respect to the integrated light amount E for each temperature is set as a linear function. At this time, the slope and the intercept of the linear function at each temperature are approximated by the quadratic functions of formula (1) and formula (2). The slopes and the intercepts at temperatures of 20°C and 30°C are shown in Table 3. The integrated light amounts E needed in order for the cured layer film thickness d to become d = 110 $\mu$m are shown in Table 4.

[Table 3]

| temperature (°C) | slope | intercept |
|---|---|---|
| 20 | 28.909 | -228.700 |
| 30 | 38.739 | -109.390 |

[Table 4]

| temperature (°C) | integrated light amount E (mJ/cm$^2$) |
|---|---|
| 20 | 11.716 |
| 30 | 5.633 |

<Example 2>

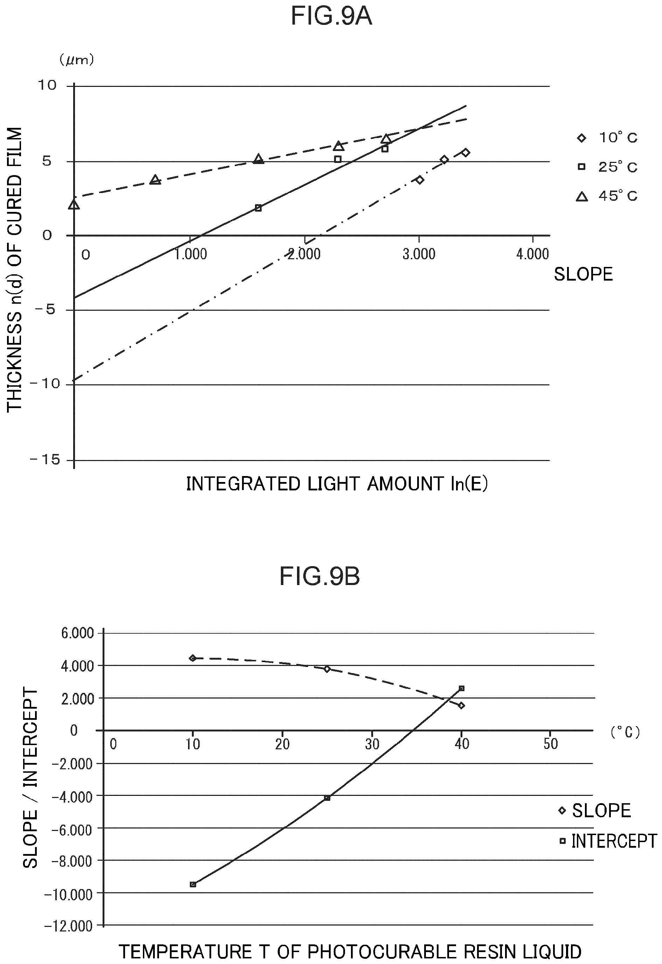

The logarithmic values (natural logarithmic values) ln(E), ln(d) for the results of measurement of the photocurable resin composition were computed. The logarithmic values ln(E), ln(d) are shown in Table 5 and are plotted in Fig. 9A.

[Table 5]

| integrated light amount ln(E)(mJ/cm$^2$) | film thickness ln(d) (μm) of cured layer | | |
|---|---|---|---|
| | 10°C | 25°C | 40°C |
| 0.000 | | | 2.303 |
| 0.693 | | | 3.921 |
| 1.609 | | 1.792 | 5.371 |
| 2.303 | | 5.136 | 6.174 |
| 2.708 | | 5.829 | 6.593 |
| 2.996 | 3.807 | | |
| 3.219 | 5.075 | | |
| 3.401 | 5.598 | | |

In Fig. 9A, the film thickness ln(d) of the cured layer with respect to the integrated light amount ln(E) at each temperature, approximated by a linear function (first order function: y = ax+b), is as follows (where y is the cured layer film thickness ln(d), and x is the illumination energy ln(E)).
10°C:

$$y = 4.4656x - 9.4868$$

(R$^2$ = 0.9688)
25°C:

$$y = 3.7986x - 4.1302$$

(R$^2$ = 0.9556)
40°C:

$$y = 1.5584x + 2.591$$

(R$^2$ = 0.9786)
From this, the slope and the intercept of the linear function at each of temperatures 10°C, 25°C, 40°C were obtained, and the obtained slopes and intercepts are shown in Table 6 and Fig. 9B.

[Table 6]

| temperature (°C) | slope | intercept |
|---|---|---|
| 10 | 4.466 | -9.487 |
| 25 | 3.799 | -4.130 |
| 40 | 1.558 | 2.591 |

From Table 6 and Fig. 9B, the slope and intercept can be approximated by the following quadratic functions (where x is the temperature).

slope:

$$y = -0.0035x^2 + 0.0779x + 4.0363 \qquad \ldots(3)$$

($R^2 = 1$)
intercept:

$$y = 0.003x^2 + 0.251x - 12.3 \qquad \ldots(4)$$

($R^2 = 1$)

Here, in Example 2, those that have high correlation factors are selected by polynomial analysis. In Example 2, as an example, the photocured layer film thickness ln(d) with respect to the integrated light amount ln(E) for each temperature is set as a linear function. At this time, the slope and the intercept of the linear function at each temperature are approximated by the quadratic functions of formula (3) and formula (4).

The slopes and the intercepts at temperatures of 20°C and 30°C are shown in Table 7. The integrated light amounts E needed in order for the cured layer film thickness d to become d = 110 μm are shown in Table 8.

[Table 7]

| temperature (°C) | slope | intercept |
|---|---|---|
| 20 | 4.194 | -6.080 |
| 30 | 3.223 | -2.070 |

[Table 8]

| temperature (°C) | integrated light amount ln(E) | integrated light amount (mJ/cm$^2$) |
|---|---|---|
| 20 | 2.570 | 13.069 |
| 30 | 2.100 | 8.170 |

<Comparative Example>

In the Comparative Example, control of the integrated light amount (illuminance) that corresponds to the temperature of the photocurable resin composition is not carried out, and molding is carried out by illuminating light, by which there is obtained an integrated light amount E (illuminance) that is set for 25°C that is a standard temperature, onto the photocurable resin composition.

<Evaluation>

For the evaluation, in the methods of Example 1, Example 2 and the Comparative Example, the temperature of the photocurable resin liquid was maintained at 15°C, 25°C, 35°C respectively, and molding was carried out by using the same molding data (the molding data of the molded object 50) at each temperature. The layering pitch p of the molding was 100 μm

In the evaluation, three-dimensional data of the molded objects 50 that were molded by the methods of Example 1, Example 2 and the Comparative Example were obtained by three-dimensional scanning using the three-dimensional scanner Rexcan DS2-L (trade name) manufactured by Solutionix, and numerical values of the molded system were obtained by comparison with the molding data of the molded objects 50.

With regard to the molding accuracy, the three-dimensional data of the respective molded objects of Example 1, Example 2 and the Comparative Example were superimposed with the molding data by using comparison software Geomagic DesignX (trade name) manufactured by 3D Systems, Inc..

Further, in the evaluation, from the results of output of the aforementioned comparison software, an average error of less than 0.1 mm was evaluated as "o", an average error of 0.1 mm or more and less than 0.2 mm was evaluated as "△", and an average error of 0.2 mm or more was evaluated as "×". The results of this evaluation are shown in Table 9.

[Table 9]

| Evaluation of Molding Accuracy | | | |
|---|---|---|---|
| room temperature at time of molding | Example 1 | Example 2 | Comparative Example |
| 15°C | ○ | ○ | x |
| 25°C | ○ | ○ | ○ |
| 35°C | ○ | ○ | Δ |

As shown in Table 9, in the Comparative Example, at a temperature of 25°C, an evaluation of "○" was received, and, at temperatures of 15°C and 35°C, as compared with the case in which the temperature was 25°C, the average error increased, and it was judged that, when the temperature of the photocurable resin liquid changed, the molding accuracy deteriorated.

In contrast, in Example 1 and Example 2, at a temperature of 25°C, an evaluation of "○" was received, and, also at both temperatures of 15°C and 35°C, an evaluation of "○" was received. Accordingly, highly-accurate molded objects were obtained by setting the integrated light amount E in accordance with the temperature of the photocurable resin liquid, and carrying out stereolithography such that the integrated light amount E that was set was obtained.

Note that, in the present embodiment, as relational expressions, formula (1) and formula (2) were used in Example 1, and formula (3) and formula (4) were used in Example 2. However, for these relational expressions, the relational expressions that are applied to the stereolithography at the stereolithography device are not limited to this. The relational expressions that are used in the stereolithography by the stereolithography device of the present aspect are not limited. For the relational expressions that are applied to stereolithography at the stereolithography device, for example, it is more preferable to prepare plural relational expressions (or plural groups of relational expressions) as shown in Example 1 and Example 2, and compare the coefficients of determination ($R^2$) of the respective prepared relational expressions, and select and use the one with the higher coefficient of determination (e.g., in the present embodiment, the coefficients of determination of the linear functions at the respective temperatures of Example 1 are higher than the coefficients of determination of the linear functions at the respective temperatures of Example 2, and therefore, formula (1) and formula (2) of Example 1 are selected). Due thereto, stereolithography that uses a photocurable resin composition and has even higher accuracy can be carried out.

Note that, in the above-described present embodiment, a form is described in which the programs are stored in advance (installed) in the storage section 28. However, the programs may be provided in a form of being recorded on any recording medium such as a CD-ROM, a DVD-ROM, a micro SD card, or the like.

The disclosure of Japanese Patent Application No. 2017-243513 is, in its entirety, incorporated by reference into the present specification.

All publications, patent applications, and technical standards mentioned in the present specification are incorporated by reference into the present specification to the same extent as if such individual publication, patent application, or technical standard was specifically and individually indicated to be incorporated by reference.

**Claims**

1. A stereolithography device that forms a cured layer by illuminating light onto a photocurable composition that is in a liquid form and photocuring the photocurable composition, and that layers the cured layer and molds a three-dimensional molded object, the device comprising:

   a measuring section that measures a temperature of the photocurable composition; and
   an illuminating section that, at a time of forming the cured layer, illuminates lights onto the photocurable composition such that there becomes an integrated light amount that corresponds to a measurement temperature of the measuring section.

2. The stereolithography device of Claim 1, wherein:

   the measuring section measures the temperature of the photocurable composition within a predetermined region, and
   the illuminating section illuminates light onto the photocurable composition on the basis of temperature information obtained from a measurement temperature that is set in accordance with predetermined standards to be used in control of the integrated light amount, from among the measurement temperatures.

3. The stereolithography device of Claim 2, further comprising a measurement temperature processing section that, in parallel with formation of the cured layer, can set, in accordance with predetermined standards and from among the measurement temperatures, a measurement temperature that is to be used in control of the integrated light amount.

4. The stereolithography device of Claim 2, wherein the illuminating section carries out control of the integrated light amount on the basis of the temperature information that is obtained from a measurement temperature, of any region or time period and whose use in control of the integrated light amount is set in advance, among the measurement temperatures.

5. The stereolithography device of any one of Claim 2 through Claim 4, comprising:

   an acquiring section that acquires, from a temperature measured by the measuring section, the temperature information of the photocurable composition within a region facing a molding surface at which the cured layer is to be formed,
   wherein the illuminating section illuminates light, which is such that there becomes the integrated light amount that is set from the temperature information, onto the photocurable composition within the region that faces the molding surface.

6. The stereolithography device of Claim 5, wherein
   the acquiring section sets the temperature information for each of a plurality of divisional regions that are obtained by dividing a region, at which one of the cured layers is to be formed, longitudinally and laterally along the molding surface, and
   the illuminating section illuminates light onto the respective divisional regions such that there becomes the integrated light amount that is set from the temperature information of that divisional region.

7. The stereolithography device of any one of Claim 2 through Claim 6, wherein temperature information in a film thickness direction of the cured layer is included in the temperature information.

8. The stereolithography device of any one of Claim 2 through Claim 7, wherein:

   the measuring section measures changes in temperature of the photocurable composition in a predetermined time period, and
   the illuminating section carries out control of the integrated light amount on the basis of temperature information that includes measured temperature changes.

9. The stereolithography device of any one of Claim 2 through Claim 8, wherein the illuminating section carries out control of the integrated light amount on the basis of temperature information that is weighted in accordance with a cured layer that is layered or a measurement temperature.

10. The stereolithography device of any one of Claim 2 through Claim 9, further comprising:

    a storage section in which is stored curing information expressing, for the photocurable composition, a relationship between temperature of the photocurable composition, an integrated light amount, and film thickness of the cured layer that corresponds to the integrated light amount; and
    a setting section that, on the basis of the temperature information and the curing information, sets the integrated light amount of light that is to be illuminated onto the photocurable composition from the illuminating section.

11. The stereolithography device of any one of Claim 2 through Claim 10, further comprising:

    a storage section in which is stored curing information expressing, for the photocurable composition, a relationship between temperature of the photocurable composition, an integrated light amount, and film thickness of the cured layer that corresponds to the integrated light amount; and
    a correcting section that, in accordance with the temperature information, corrects the integrated light amount that is set in advance so as to be illuminated onto the photocurable composition at the illuminating section.

**12.** The stereolithography device of any one of Claim 2 through Claim 11, wherein, the higher the temperature of the photocurable composition obtained from the temperature information, the smaller the integrated light amount illuminated from the illuminating section, as compared with a case in which the temperature is low.

**13.** The stereolithography device of any one of Claim 1 through Claim 12, wherein the illuminating section illuminates, onto the photocurable composition, light by which an illuminance corresponding to the integrated light amount is obtained in an illumination time period that is set in advance.

**14.** The stereolithography device of any one of Claim 1 through Claim 13, wherein the illuminating section illuminates light, by which an illuminance that is set in advance is obtained, onto the photocurable composition for an illumination time period that corresponds to the integrated light amount.

**15.** The stereolithography device of any one of Claim 1 through Claim 14, wherein the molded object that is three-dimensional is molded such that an average film thickness of each of the cured layers is greater than or equal to 20 $\mu$m and less than or equal to 150 $\mu$m.

**16.** The stereolithography device of any one of Claim 1 through Claim 15, wherein, at a time of forming the cured layer, light is illuminated such that a region of the photocurable composition, which region is, in a film thickness direction, a width of greater than or equal to 5% and less than or equal to 30% of a film thickness of the photocured layer, is cured.

**17.** A stereolithography program causing a computer, which is provided at a stereolithography device that forms a cured layer by illuminating light onto a photocurable composition that is in a liquid form and photocuring the photocurable composition, and that layers the cured layers and molds a three-dimensional molded object, to function as:

a measuring section that measures a temperature of the photocurable composition; and
an illuminating section that, at a time of forming the cured layer, illuminates light onto the photocurable composition such that there becomes an integrated light amount that corresponds to a measurement temperature of the measuring section.

**18.** A stereolithography method that forms a cured layer by illuminating light onto a photocurable composition that is in a liquid form and photocuring the photocurable composition, and that layers the cured layers and molds a three-dimensional molded object, the method comprising:

a measuring step of measuring a temperature of the photocurable composition; and
an illuminating step of, at a time of forming the cured layer, illuminating light onto the photocurable composition such that there is obtained an integrated light amount that corresponds to the temperature that has been measured.

# FIG.1

FIG.2

# FIG.3A

PROCESSING

RECEIVE MOLDING DATA ⌐100

DATA GENERATING PROCESSING
(DATA CONVERTING PROCESSING) ⌐102

MOLDING PROCESSING ⌐104

REMOVE MOLDED OBJECT
FROM PLATFORM ⌐106

RETURN

# FIG.3B

```
      ┌──────────────────────┐
      │  MOLDING PROCESSING   │
      └──────────┬───────────┘
                 │◄─────────────────────┐
                 ▼                        │
   ┌──────────────────────────┐ ─110     │
   │   MEASURE TEMPERATURE     │          │
   │  (MEASURE TEMPERATURE OF  │          │
   │ PHOTOCURABLE RESIN LIQUID)│          │
   └────────────┬─────────────┘          │
                ▼                         │
   ┌──────────────────────────┐ ─112     │
   │ SET INTEGRATED LIGHT AMOUNT│         │
   │    ON BASIS OF MEASURED   │          │
   │        TEMPERATURE        │          │
   └────────────┬─────────────┘          │
                ▼                         │
   ┌──────────────────────────┐ ─114     │
   │  MOVE PLATFORM TO MOLDING │          │
   │          POSITION         │          │
   └────────────┬─────────────┘          │
                ▼                         │
   ┌──────────────────────────┐ ─116     │
   │ READ-IN CROSS-SECTIONAL DATA│        │
   │       OF ONE LAYER        │          │
   │     (SET MASK IMAGE)      │          │
   └────────────┬─────────────┘          │
                ▼                         │
   ┌──────────────────────────┐ ─118     │
   │    ILLUMINATE LIGHT OF    │          │
   │ SET INTEGRATED LIGHT AMOUNT│         │
   └────────────┬─────────────┘          │
                ▼                         │
   ┌──────────────────────────┐ ─120     │
   │      MOVE PLATFORM        │          │
   │    (INTERVAL POSITION)    │          │
   └────────────┬─────────────┘          │
                ▼                  ─122   │
            ◇─────────────◇   N          │
            │ MOLDING ENDED? ├───────────┘
            ◇─────────────◇
                │ Y
                ▼
        ┌──────────────┐
        │    RETURN     │
        └──────────────┘
```

# FIG.3C

```
        ┌─────────────────────┐
        │      MOLDING        │
        │    PROCESSING       │
        └─────────────────────┘
                 │
                 ▼
    ┌───────────────────────────────────┐
    │      MEASURE TEMPERATURE          │
    │   (MEASURE TEMPERATURE OF         │──110
    │  PHOTOCURABLE RESIN LIQUID)       │
    └───────────────────────────────────┘
                 │
                 ▼
             ╱─────────────────────╲
        N   ╱      MEASURED          ╲──130
    ◄──────◄ TEMPERATURE LESS THAN    ►
            ╲    THRESHOLD VALUE?     ╱
             ╲─────────────────────╱
    │                │ Y
    │                ▼
    │  134      ┌──────────────────────────┐
    │           │ SET INTEGRATED LIGHT AMOUNT │──132
    ▼           │ WHILE CONTINUING TEMPERATURE│
┌─────────────┐ │    INFORMATION X1           │
│SET INTEGRATED│ └──────────────────────────┘
│LIGHT AMOUNT  │         │
│ON BASIS OF   │         │
│TEMPERATURE   │         │
│INFORMATION X2│         │
└─────────────┘         │
    │                   │
    └──────────────────►│
                        ▼
           ┌──────────────────────┐
           │  MOVE PLATFORM TO     │──114
           │  MOLDING POSITION     │
           └──────────────────────┘
                        │
                        ▼
           ┌──────────────────────┐
           │ READ-IN CROSS-SECTIONAL│──116
           │  DATA OF ONE LAYER    │
           │  (SET MASK IMAGE)     │
           └──────────────────────┘
                        │
                        ▼
           ┌──────────────────────┐
           │ ILLUMINATE LIGHT OF   │──118
           │   SET INTENSITY       │
           └──────────────────────┘
                        │
                        ▼
           ┌──────────────────────┐
           │   MOVE PLATFORM       │──120
           │  (INTERVAL POSITION)  │
           └──────────────────────┘
                        │
                        ▼
                   ╱─────────────╲      N
                  ╱ MOLDING ENDED? ╲──122──┐
                   ╲─────────────╱         │
                        │ Y                │
                        ▼                  │
                 ┌─────────────┐           │
                 │   RETURN    │           │
                 └─────────────┘           │
```

# FIG.3D

MOLDING PROCESSING

SURFACE AREA RATIO LESS THAN GIVEN VALUE? — 136

140 — N

SET MEASURED TEMPERATURE (ACTUALLY MEASURED VALUE) AS MEASUREMENT TEMPERATURE (MEASUREMENT TEMPERATURE = MEASURED TEMPERATURE)

Y — 138

SET PREDICTED TEMPERATURE AS MEASUREMENT TEMPERATURE (MEASUREMENT TEMPERATURE = PREDICTED TEMPERATURE)

SET INTEGRATED LIGHT AMOUNT ON BASIS OF MEASUREMENT TEMPERATURE — 112A

MOVE PLATFORM TO MOLDING POSITION — 114

READ-IN CROSS-SECTIONAL DATA OF ONE LAYER (SET MASK IMAGE) — 116

ILLUMINATE LIGHT OF SET INTEGRATED LIGHT AMOUNT — 118

MOVE PLATFORM (INTERVAL POSITION) — 120

MOLDING ENDED? — 122

N

Y

RETURN

# FIG.4

# FIG.5A

EP 3 711 929 A1

# FIG.5B

# FIG.5C

FIG.6

FIG.7

## FIG.8A

## FIG.8B

## FIG.9A

## FIG.9B

<div align="center">

**INTERNATIONAL SEARCH REPORT**

</div>

| | International application No. |
|---|---|
| | PCT/JP2018/047115 |

**A. CLASSIFICATION OF SUBJECT MATTER**

Int.Cl. B29C64/393(2017.01)i, B29C64/124(2017.01)i, B33Y10/00(2015.01)i, B33Y40/00(2015.01)i, B33Y50/02(2015.01)i

According to International Patent Classification (IPC) or to both national classification and IPC

**B. FIELDS SEARCHED**

Minimum documentation searched (classification system followed by classification symbols)

Int.Cl. B29C64/393, B29C64/124, B33Y10/00, B33Y40/00, B33Y50/02

Documentation searched other than minimum documentation to the extent that such documents are included in the fields searched

| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| P, X<br>P, Y | WO 2018/062002 A1 (CANON INC.) 05 April 2018, claims, paragraphs [0028], [0040]–[0041], [0046], [0060], fig. 1–10 & JP 2018-51958 A | 1–18<br>2–16 |
| Y | WO 2006/035739 A1 (NABTESCO CORPORATION) 06 April 2006, claims, paragraph [0049] (Family: none) | 1–18 |
| Y | JP 2008-201135 A (NABTESCO CORPORATION) 04 September 2008, claims, paragraph [0021], fig. 1 (Family: none) | 1–18 |
| P, A | WO 2018/061993 A1 (CANON INC.) 05 April 2018, entire text, all drawings & JP 2018-51951 A | 1–18 |
| P, A | WO 2018/061996 A1 (CANON INC.) 05 April 2018, entire text, all drawings & JP 2018-51950 A | 1–18 |

☐ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 25 January 2019 (25.01.2019) | 12 February 2019 (12.02.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005131938 A
- JP 2017243513 A